# EUROPÄISCHE PATENTSCHRIFT

(11) **EP 1 710 540 B1**
(45) Veröffentlichungstag und Bekanntmachung des Hinweises auf die Patenterteilung: **30.06.2010**
(21) Anmeldenummer: 06450054.9
(22) Anmeldetag: 07.04.2006
(51) Int. Cl.: G01C 21/26

(54) **Verfahren zum Erkennen des Passierens eines vorgegebenen Ortes**
Method for detecting the passing of a predetermined location
Procédé destiné à la reconnaissance du passage d'un lieu prédéterminé

(30) Priorität: 07.04.2005 DE 102005016814
(43) Veröffentlichungstag der Anmeldung: 11.10.2006
(73) Patentinhaber: EFKON MOBILITY GMBH, 13355 Berlin (DE)
(72) Erfinder: Rose, Bernd, 16552 Schildow (DE); Lydike, Matthias, 12526 Berlin (DE)
(74) Vertreter: Sonn & Partner Patentanwälte

(56) Entgegenhaltungen:
- EP-A- 0 730 728
- EP-A- 1 335 325
- EP-B1- 1 436 783
- WO-A-01/11571
- WO-A-02/101661
- WO-A-03/042926
- WO-A-2004/025574
- US-A- 5 717 389

## Beschreibung

Die Erfindung betrifft ein Verfahren zum Feststellen des Passierens eines vorgegebenen Ortes durch ein sich in einer vorgegebenen Richtung bewegendes Objekt gemäß dem einleitenden Teil von Anspruch 1. Dieses Verfahren kann z.B. dazu verwendet werden, das Passieren einer virtuellen Mautstelle festzustellen und somit die Gebühren für das Befahren eines mautpflichtigen Straßenabschnittes zu ermitteln, wenn der Ort derart festgelegt ist, dass von der Tatsache, dass dieser Ort passiert wurde, zweifelsfrei darauf geschlossen werden kann, dass der entsprechende mautpflichtige Straßenabschnitt befahren wurde oder wird. Es sind jedoch auch andere Anwendungen des Verfahrens denkbar, wie z.B. bei Benützung eines Parkplatzes oder einer Garage.

In der DE 43 44 433 C ist ein Verfahren beschrieben, bei dem durch einen GPS-Empfänger in einem Fahrzeug die Position dieses Fahrzeuges laufend festgestellt wird. Die Positionsdaten werden mit gespeicherten Orts-Koordinaten von Autobahn-Ein- und Ausfahrten verglichen, und bei Übereinstimmung der Koordinaten werden diese an ein Abrechnungszentrum übertragen, in dem die zurückgelegten mautpflichtigen Autobahnkilometer berechnet werden. Es ist jedoch nicht angegeben, nach welchen Kriterien die Übereinstimmung der Koordinaten bestimmt wird.

Ein ähnliches Verfahren ist in der WO 95/20801 A beschrieben. Auch hier wird eine Übereinstimmung der Koordinaten der momentanen Position des Fahrzeuges mit denen der virtuellen Erhebungsstellen zugrunde gelegt, ohne dass näher beschrieben wird, unter welchen Randbedingungen die Koordinaten als übereinstimmend betrachtet werden.

Es muss jedoch davon ausgegangen werden, dass als Kriterium für die Übereinstimmung das Unterschreiten eines bestimmten Abstandes der ermittelten Position des Fahrzeuges von dem durch die gespeicherten Orts-Koordinaten definierten Punkt verwendet wird. Geometrisch ausgedrückt wird also um den durch die Koordinaten bestimmten Punkt ein Kreis mit einem vorgegebenen Radius gelegt, und wenn sich ein bewegliches Objekt aufgrund seiner (fehlerbehafteten) Positionsbestimmung (vermeintlich) innerhalb dieses Kreises befindet, gilt der Ort als passiert.

Ein Nachteil dieses Verfahrens ist, dass konkrete geografische Gegebenheiten des jeweiligen Ortes nicht berücksichtigt werden können und daher die Gefahr einer Fehl-Erkennung relativ groß ist. Beispielsweise könnte eine Straße derart verlaufen, dass, verbunden mit der begrenzten Genauigkeit der Positionsbestimmung mittels Satelliten-Navigation, das Passieren eines Ortes mehrmals erkannt wird. Einflüsse durch die Höhe werden bei diesem Verfahren ebenfalls nicht eliminiert. Wenn z.B. Gebirgsstraßen in Serpentinen verlaufen, ist der Straßenverlauf derart, dass die Straßenführung, wenn man sie nur in zwei Dimensionen abbildet, ungünstig für die Erkennung nach den bekannten Verfahren ist. Eine weitere Ursache für Fehl-Erkennungen ergibt sich, wenn Straßen über längere Strecken nahezu parallel zueinander verlaufen oder einander in spitzem Winkel kreuzen.

In der WO 2004/025574 A ist ein Verfahren zur Identifikation eines mautpflichtigen Streckenabschnittes beschrieben, das die Ungenauigkeiten der oben genannten Verfahren dadurch verringert, dass zusätzlich zum Abstand zwischen der momentanen Position des Fahrzeuges und dem Ort der virtuellen Erhebungsstellen, die an den Autobahn-Ein- und Ausfahrten liegen, auch noch die Orientierung des Fahrzeuges, also die Richtung der Annäherung an die virtuelle Mautstelle, berücksichtigt wird. Dabei wird zunächst festgestellt, ob ein bestimmter Abstand zu der virtuellen Mautstelle unterschritten wird. Wenn das der Fall ist, wird als nächstes die Richtung des Fahrzeuges ermittelt und festgestellt, ob sich diese innerhalb eines vorgegebenen Toleranzbereiches befindet. Wenn auch dies der Fall ist, wird optional nochmals geprüft, ob sich das Fahrzeug in einem nun kleineren Abstand zu der virtuellen Mautstelle befindet. Ein Nachteil dieses Verfahrens ist, dass es relativ rechenaufwändig ist. Außerdem werden nach diesem Verfahren die virtuellen Mautstellen auf die Autobahn-Ein- und Ausfahrten gelegt, woraus resultiert, dass es Probleme mit der Erkennung der virtuellen Mautstellen geben kann, wenn diese virtuellen Mautstellen an Stellen mit schlechtem GPS-Empfang liegen. Zur Lösung dieser Probleme sind dann zusätzliche aufwändige Maßnahmen notwending, wie z. B. die Installation von Stützbaken, wie in der DE 199 49 699 C beschrieben, auf die man aber nach Möglichkeit verzichten möchte.

Auch bei der Einrichtung gemäß der EP 730 728 B wird das Passieren eines einer Einfahrt bzw. Ausfahrt einer Straßen-Sektion zugeordneten Identifikationspunktes dadurch festgestellt, dass das betroffene Fahrzeug mit einer Position innerhalb eines vorgegebenen Abstandes vom Identifikationspunkt verifiziert wird, d.h. also dann, wenn der Abstand der ermittelten Fahrzeug-Position vom durch Koordinaten vorgegebenen Identifikationspunkt kleiner als ein vorgegebener Radius ist. Zusätzlich wird das Fahrzeug im Hinblick auf das Durchfahren von einzelnen, danach folgenden Straßensegmenten überprüft, wobei diese Segmente durch Vorgabe von Bestimmungspunkten und von durch diese Bestimmungspunkte verlaufenden Mittellinien festgelegt werden, und wobei laufend die Abstände der aufeinanderfolgend ermittelten Positionen des Fahrzeuges von dieser Mittellinie ermittelt werden. Diese Abstände werden aufsummiert, und die Summe wird durch die Zahl der Abstände dividiert, um so einen "gleitenden Mittelwert" zu erhalten, welcher kleiner als ein vorgegebener Abstandsgrenzwert sein muss, damit ein Passieren erkannt wird. Auch hierbei handelt es sich um eine speicher- und rechenaufwändige Vorgangsweise mit einer laufenden Überwachung der Positionen eines Fahrzeuges, wobei der Eintritt in das betroffene Straßensegment in herkömmlicher und unzuverlässiger Weise über den um den Identifikationspunkt gezogenen Kreis festgestellt wird.

Es ist nun Aufgabe der Erfindung ein einfach zu realisierendes Verfahren vorzuschlagen, das es ermöglicht, mit Hilfe zusätzlicher, einfacher Daten, die spezifische geografische Bedingungen der einzelnen Orte kennzeichnen und ergänzend zu den Koordinaten der Orte angegeben werden, die Erkennungssicherheit des Passierens der Orte durch bewegliche Objekte auf der Erdoberfläche zu verbessern. Für den Anwendungsfall eines Mautsystems müssen diese Orte nicht zwangsläufig an Autobahn-Ein- und/oder Ausfahrten liegen, vielmehr können diese Orte derart an Stellen des jeweiligen mautpflichtigen Streckenabschnittes gelegt werden, dass aus dem Passieren zweifelsfrei geschlossen werden kann, dass der entsprechende Streckenabschnitt benutzt wurde.

Zur Lösung dieser Aufgabe sieht die Erfindung ein Verfahren wie in Anspruch 1 angegeben vor. Vorteilhafte Ausführungsformen und Weiterbildungen sind in den abhängigen Ansprüchen definiert.

Beim erfindungsgemäßen Verfahren werden mit Hilfe der Positionserkennungs-Einrichtung des beweglichen Objekts in zeitlichen Abständen, zu aufeinanderfolgenden Zeitpunkten, die Positionen des Objekts ermittelt; weiters wird jeweils die Strecke zwischen zwei aufeinanderfolgenden Positionen ermittelt. Zu jedem vorgegebenen Ort werden eine vom Ort ausgehende Strecke sowie eine Querstrecke an deren "vorderen" Ende festgelegt. Der Ort gilt genau dann als passiert, wenn eine Positionen-Strecke die Querstrecke schneidet, wenn also zwei, zu aufeinanderfolgenden Zeitpunkten ermittelte Positionen auf verschiedenen Seiten der Querstrecke liegen und die Strecke zwischen ihnen die Querstrecke schneidet.

Um besonders einfache Berechnungen zu ermöglichen, wird bevorzugt die Querstrecke als unter einem Winkel von 90° zur vom vorgegebenen Ort ausgehenden Strecke verlaufend bestimmt; dies ist bei entsprechender Festlegung des vorgegebenen Ortes in einer möglichst störungsfreien Umgebung und bei möglichst geradlinigem Verlauf der Bewegung des Objekts ohne weiteres möglich.

Wenn vorübergehend das Passieren des vorgegebenen Ortes nicht festzustellen ist, etwa wenn im Fall einer gebührenpflichtigen Autobahnstrecke zufolge einer Baustelle keine Gebühr eingehoben werden soll, so kann bei der erfindungsgemäßen Technik einfach in den Speichern der den sich bewegenden Objekten zugehörigen Geräte die Länge der zum jeweiligen vorgegebenen Ort gehörigen Querstrecke einfach auf Null gesetzt werden. Damit kann kein Schnittpunkt mehr festgestellt werden, so dass auch kein Passieren des vorgegebenen Ortes festgestellt wird.

Im Fall von auf einer Seite der Bewegungsbahn des Objekts vorhandenen Störquellen oder aber von bogenförmigen Bewegungsbahnen können die Teilstrecken der Querstrecke auch mit unterschiedlichen Streckenlängen bestimmt werden, um so den örtlichen Gegebenheiten Rechnung zu tragen.

Bevorzugt werden ergänzend zu den auf den vorgegebenen Ort bezogenen Strecken noch zusätzliche Flächen festgelegt. Diese Flächen sind Polygone, deren eine (vordere) Seite die Querstrecke ist. Die anderen Seiten des Polygons werden jeweils gemäß den örtlichen Gegebenheiten, insbesondere gemäß dem Verlauf der Straße und dem Vorhandensein von Stör-Objekten (z.B. Gebäuden, Bäumen ...) in der Nähe des Ortes, die eine Abschattung zu den zur Positionsbestimmung verwendeten Satelliten oder eine Reflexion der Satellitensignale bewirken können, festgelegt. Zur Vereinfachung der Berechnung werden die Ecken des Polygons vorzugsweise rechtwinklig festgelegt. In dieser Ausführungsform gilt ein vorgegebener Ort genau dann als passiert, wenn zusätzlich zum Kriterium des Schneidens der Strecken die zeitlich später ermittelte Position des Objekts als innerhalb des zum Ort gehörenden Polygons liegend festgestellt wird.

Die Erfindung wird nachfolgend anhand von bevorzugten Ausführungsbeispielen, auf die sie jedoch nicht beschränkt sein soll, und unter Bezugnahme auf die Zeichungen noch weiter erläutert. Es zeigen:
Fig. 1 schematisch in einem Blockschaltbild eine Einrichtung zur Erkennung der Position eines Objektes, wie sie in einem Gerät, das im Objekt enthalten ist, vorhanden ist;
Fig. 2 schematisch in Draufsicht (d.h. in zweidimensionaler Darstellung) die Lage eines vorgegebenen Ortes, dessen Passieren festgestellt werden soll, sowie der diesem Ort zugeordneten Strecken und weiters aufeinanderfolgende, mittels einer Einrichtung gemäß Fig. 1 festgestellte Objekt-Positionen, zur Feststellung des Passierens des Ortes mit dem erfindungsgemäßen Verfahren; und
Fig. 3 eine der Fig. 2 vergleichbare schematische zweidimensionale Darstellung, wobei im Vergleich zu Fig. 2 zusätzlich eine durch ein Polygon festgelegte Fläche dem vorgegebenen Ort, zur Festlegung eines zusätzlichen Kriteriums für das Passieren des Ortes, zugeordnet ist.

Die Erfindung wird nachfolgend beispielhaft anhand der besonders bevorzugten Anwendung des Verfahrens in einem automatischen Mautsystem erläutert, bei dem das Befahren eines Straßenabschnittes in einfacher Weise dadurch festgestellt wird, dass ein vorgegebener Ort passiert wird, der so auf dem entsprechenden Straßen-Abschnitt festgelegt wird, dass ein reguläres Abbiegen innerhalb dieses Abschnittes nicht möglich ist, ohne den Ort zu passieren. Eine Nicht- oder Doppelerkennung würde hierbei zu einer falschen Berechnung der Gebühren führen. Mit Hilfe des vorliegenden Verfahrens kann eine solche Nicht- oder Doppelerkennung bei geeigneter, für jeden Ort individueller Festlegung von nachstehend näher erläuterten Parametern weitgehend vermieden werden. Auch auf die in Problemfällen beim Stand der Technik üblichen Stützbaken kann in den meisten Fällen verzichtet werden.

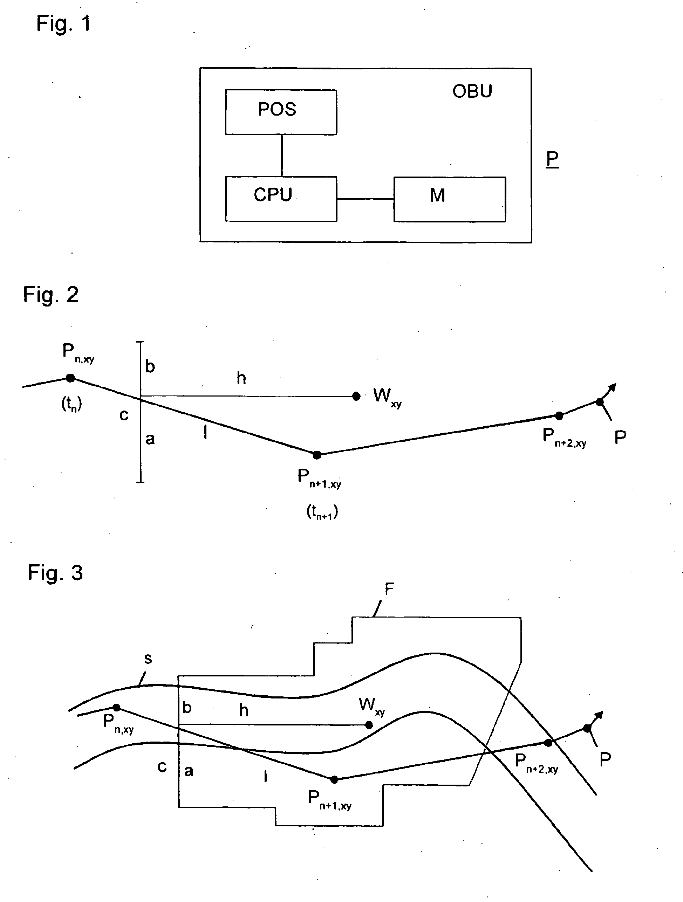

Ein in einem als Objekt P (vgl. auch Fig. 2 und 3) vorliegenden Fahrzeug eingebautes Gerät OBU (OBU - On Bord Unit) verfügt gemäß Fig. 1 über mindestens folgende Komponenten: Eine Einrichtung POS zur Positionserkennung, ein Rechenwerk CPU und einen Speicher M zur Speicherung von den einzelnen Orten W (s. Fig. 2, 3) zugeordneten Merkmalen bzw. Parametern. Die Einrichtung POS zur Positionserkennung, z.B. ein GPS-Empfänger, ermittelt in kleinen Zeitintervallen Δt, z.B. in Zeitabständen von 1s, die Positionen P_{i,xy} des Fahrzeuges P. Das Rechenwerk CPU berechnet die Strecken 1 zwischen zeitlich aufeinanderfolgenden Positionen P_{n,xy} bzw. P_{n+1,xy} und prüft, ob diese Positionen-Strecke 1 eine Querstrecke c einer in der Nähe befindlichen virtuellen Mautstelle, die durch einen Ort W gegeben ist, schneidet.

Dies ergibt sich deutlicher aus der Darstellung in Fig. 2, wo zwei aufeinanderfolgende Positionen P_{n,xy} und P_{n+1,xy} (sowie eine weitere Position P_{n+2,xy}) des sich bewegenden Objektes bzw. Fahrzeuges P veranschaulicht sind. Diese Positionen werden zu unmittelbar aufeinanderfolgenden Zeitpunkten tₙ, tₙ₊₁, wie erwähnt beispielsweise mit einen zeitlichen Abstand Δt von 1s, ermittelt, wobei diese Positionsermittlung über GPS, mit Hilfe der Positionserkennungs-Einrichtung POS (Fig. 1), durchgeführt wird.

Dem vorgegebenen Ort W_{xy}, der beispielhaft eine virtuelle Mautstelle definiert, ist eine - virtuelle - Strecke h zugeordnet, die von diesem punktförmigen Ort W_{xy}, der durch seine Koordinaten festgelegt ist, ausgeht und ungefähr in jene Richtung verläuft, aus der sich ein Objekt bzw. Fahrzeug P heranbewegt, vgl. auch Fig. 3, wo ein zusätzlicher Straßenverlauf S eingezeichnet ist, der somit die Fahrtrichtung, d.h. die Richtung, aus der sich das Objekt P dem Ort W_{xy} nähert, vorgibt. Dieser Strecke h ist am vorderen, vom Punkt W_{xy} abgelegenen Ende eine Querstrecke c zugeordnet, die aus zwei zueinander in einer Linie ausgerichteten Teilstrecken a, b besteht, wie aus den Darstellungen in Fig. 2 und 3 ersichtlich ist. Diese Querstrecke c bzw. ihre Teilstrecken a, b verlaufen bevorzugt wie dargestellt im rechten Winkel zur vom Ort W_{xy} ausgehenden Strecke h; dies muss jedoch nicht unbedingt so sein, vielmehr kann auch ein von 90° abweichender Winkel vorgesehen werden, etwa wenn die Querstrecke c in einem Bereich des Straßenabschnittes S zu liegen kommt, wo auf einer Seite Störquellen, die die Positionserkennung mittels Satellitennavigation durch Abschirmen oder Reflexionen beeinträchtigen, vorhanden sind, oder wenn in diesem Bereich Kurven gelegen sind. Ferner können diese örtlichen Besonderheiten auch Grund dafür sein, die Streckenlängen der Teilstrecken a, b verschieden lang zu legen, wie dies auch aus den Darstellungen in Fig. 2 und 3 ersichtlich ist.

Im Einzelnen bedeuten in den beiliegenden Fig. 2 und 3 die gewählten Bezeichnungen folgendes:
- W_{xy}: Koordinaten eines festen Ortes bzw. diesen Ort, der eine virtuelle Mautstelle festlegt
- P_{n,xy}: die fehlerbehafteten Koordinaten des beweglichen Objektes P an einer momentanen Position mit der Nr. n, zum Zeitpunkt tₙ
- P_{n+1,xy}: die fehlerbehafteten Koordinaten des beweglichen Objektes P an einer folgenden momentanen Position mit Nr. n+1, die zeitlich später, zum Zeitpunkt tₙ₊₁, angenommen wird als die Position Nr. n
- 1: die Strecke zwischen P_{n,xy} und P_{n+1,xy}
- tₙ: der Zeitpunkt, zu dem für die Position des beweglichen Objektes P die Koordinaten P_{n,xy} ermittelt werden
- tₙ₊₁: der Zeitpunkt, zu dem für die Position des beweglichen Objektes P die Koordinaten P_{n+1,xy} ermittelt werden
- h: eine Strecke ausgehend vom Ort W_{xy} in ungefähr die Rich-tung, aus der sich aller Voraussicht nach die beweglichen Objekte P dem Ort W_{xy} nähern
- a: eine Teilstrecke, beginnend am dem Ort W_{xy} gegenüberliegenden Endpunkt der Strecke h und von dort nach links verlaufend, vorteilhafterweise in einem Winkel von 90°
- b: eine Teilstrecke, beginnend am dem Ort gegenüberliegenden Endpunkt der Strecke h und von dort nach rechts in gerader Verlängerung der Teilstrecke a verlaufend
- c: die durch die Teilstrecken a + b gebildete Querstrecke.

Wenn nun die Strecke 1, die zwischen zwei zu aufeinanderfolgenden Zeitpunkten tₙ, tₙ₊₁, beispielsweise in einem Zeitabstand Δt von 1s, ermittelten Positionen P_{n,xy} und P_{n+1,xy} definiert ist, die Querstrecke c (egal ob oberhalb oder unterhalb der Strecke h gemäß der Darstellung in Fig. 2 und 3) schneidet, wird dies als Kriterium für das Passieren des vorgegebenen Ortes W_{xy} herangezogen, und es wird auf das Passieren des Ortes W_{xy} entschieden. Auf diese Weise kann den örtlichen Gegebenheiten weit besser Rechnung getragen werden als in dem Fall, dass einfach für die Positionserkennung überprüft wird, ob die ermittelte Position innerhalb eines Abstandes, somit Kreises, vom vorgegebenen Ort W_{xy} liegt, wie dies beim Stand der Technik der Fall ist.

Die Ausrichtungen und Dimensionen der angegebenen, im Speicher M mit Hilfe von entsprechenden Parametern bzw. Koordinaten abgelegten Strecken h, c bzw. a, b erfolgt dabei wie erwähnt unter Berücksichtigung der örtlichen Gegebenheiten, wobei diese Strecken-Parameter abhängig von diesen Gegebenheiten variieren können. Wie für den Fachmann unmittelbar erkennbar ist, hängt diese Parameterbestimmung insbesondere auch davon ab, in welchen Zeitabständen Δt die Positionsermittlungen erfolgen, und wie hoch die Geschwindigkeit des Objektes bzw. Fahrzeuges P im fraglichen Bereich wahrscheinlich ist oder aber höchstens sein kann. Auch die Genauigkeit der Positionsermittlung hat jedoch naturgemäß, wie dem Fachmann klar sein wird, einen Einfluss auf diese Parameter-Wahl. Beispielsweise können sich bei Positionsermittlungen in Sekunden-Abständen, wie angeführt, und bei Zugrundelegen von Geschwindigkeiten in der Größenordnung von 50 km/h Streckenlängen in der Größenordnung von 10 bis 20 m als zweckmäßig erweisen, wobei wie aus der Zeichnung, Fig. 2, ersichtlich ist, auch die zu erwartende Länge der Positionen-Strecke 1 und die Länge der am Ort W_{xy} ausgehenden Strecke h in der selben Größenordnung liegen. Die Querstrecke c ist demgegenüber etwas kürzer, wobei ihre Länge insbesondere von der Genauigkeit der Positionsermittlung sowie auch von den etwaigen vorhandenen seitlichen Störquellen abhängt. Die Lage und Länge der Strecken h und c bzw. (der Teilstrecken a, b) kann im jeweiligen Einzelfall jedenfalls einfach durch Testen, durch Befahren des Straßenabschnitts, in Zuordnung zum gewünschten vorgegebenen Ort W_{xy} ermittelt werden.

Bei der in Fig. 3 veranschaulichten Weiterentwicklung der vorliegenden Vorgangsweise wird zusätzlich noch geprüft, ob sich die zeitlich spätere Position P_{n+1,xy} innerhalb einer für die entsprechende virtuelle Mautstelle (Ort W_{xy}) definierten Fläche F befindet, die zur Vereinfachung der Berechnung durch ein Polygon mit bevorzugt rechtwinkligen Ecken gegeben ist. Wenn diese Bedingung (zusätzlich zu jener des Strecken-Schnittpunktes c/l) erfüllt ist, gilt der Ort W_{xy}, der die virtuelle Mautstelle kennzeichnet, als passiert, und die Gebühr für das Befahren des entsprechenden Straßenabschnittes kann in Rechnung gestellt werden.

Auch die Größe der durch das Polygon festgelegten Fläche F sowie deren Breite richtet sich nach den örtlichen Gegebenheiten und kann vom Fachmann durch einfache Tests, durch versuchsweises Befahren des Straßenabschnitts mit dem vorgegebenen Ort W_{xy}, ermittelt werden. Wenn beispielsweise die ermittelten Positionen eines sich bewegenden Objekts P allgemein dem Straßenverlauf s folgen (was in der Regel dann der Fall sein wird, wenn eine ausreichend freie Sicht gegeben ist), dann folgt, dass das die Fläche F definierende Polygon dem tatsächlichen Straßenverlauf folgt. Seine Länge in Straßenrichtung bestimmt sich naturgemäß aus der am Ort W_{xy} maximal möglichen Geschwindigkeit der bewegten Objekte P, wobei noch die dort gegebene maximale horizontale Ungenauigkeit in der Positionsermittlung hinzuzurechnen ist. Wenn beispielsweise davon ausgegangen wird, dass in Sekundenabständen die Positionen P_{i,xy} ermittelt werden, und wenn ein Fahrzeug P mit einer Einrichtung POS zur Positionsermittlung mit einer Geschwindigkeit von 50 km/h fährt, so legt es bei dieser Fahrt zwischen zwei Positionsermittlungen eine Strecke 1 mit einer Länge von ca. 14 m (genau 13,889 m) zurück. Es sei weiters angenommen, dass an der gerade befahrenen Position der GPS-Empfang mit einer Positionsgenauigkeit von 25 m möglich ist, etwa zu Folge einer einseitig die Sicht beschränkenden Bebauung. Wenn weiters angenommen wird, dass die Strecke mit einer maximalen Geschwindigkeit von 130 km/h befahrbar ist, so ergibt sich eine maximal mögliche Länge für die Strecke 1 von 36,11 m/s, aufgerundet 37 m/s. Hier ist die Positionsungenauigkeit von 25 m hinzuzurechnen, so dass eine Summe von 62 m - bei Positionsermittlungen in Sekundenabständen - erhalten wird. Hieraus bestimmt sich die (minimale, aufrundbare bzw. abgerundete) Länge des Polygons bzw. der Fläche F in Richtung des Straßenverlaufs s. (Nicht berücksichtigt sind hierbei potentielle Fehler, die durch stochastisch auftretende, bodennahe Beeinflussungen des Signals (wie z.B. Reflexionen) entstehen können.) Die Breite des Polygons wird ebenfalls entsprechend den lokalen Ungenauigkeiten gewählt, unter Berücksichtigung der geografischen Besonderheiten, wozu auch beispielsweise benachbarte Straßen gehören, die zu einer Verschmälerung des Polygons zwingen. Wird das Polygon verkleinert, so steigt die Wahrscheinlichkeit der Fehlerkennung einer Mautpflicht zugunsten der Minderung der Wahrscheinlichkeit einer Fehlerkennung eines Nicht-Mautpflichtigen.

Wenn die für ein sich bewegendes Objekt P ermittelten Position P_{n,xy,} P_{n+1,xy} usw. zwar generell einer Systematik, jedoch nicht exakt dem tatsächlichen Straßenverlauf folgen, so wird zweckmäßig das die Fläche F definierende Polygon den Positionen des bei einem Test aufgezeichneten vermeintlichen Weges folgend festgelegt, wobei sich der ermittelte Weg, der durch die Positionen P_{n,xy} usw. gegeben ist, systematisch vom tatsächlichen Straßenverlauf unterscheidet. Dieser Abweichung wird insbesondere durch den Effekt von lokalen Einschränkungen der freien Sicht, wie vorstehend erwähnt, verursacht. Es kann aber auch hier aufgrund des aufgezeichneten vermeintlichen Weges ein passendes Polygon, ebenso wie ein jeweiliger passender Streckenparameter h, c, aufgrund von Tests festgelegt werden.

Selbstverständlich ist die Erfindung nicht auf die beschriebenen und gezeigten Ausführungsbeispiele beschränkt, vielmehr sind Abwandlungen und Modifikationen im Rahmen der Erfindung möglich.

So ist insbesondere eine einfache rechteckige Fläche F denkbar; auch sind gleich lange Teilstrecken a, b möglich.

Soll ein bestimmter Straßenabschnitt zeitweise von der Mautpflicht befreit werden, z.B. wegen Bauarbeiten oder witterungsabhängig, so kann dies bei der vorliegenden Technik in besonders einfacher Weise dadurch erfolgen, dass die Länge der diesem Ort W_{xy} zugeordneten Querstrecke c im Speicher M vorübergehend auf Null gesetzt wird. Dadurch wird kein Schnittpunkt für die Positionen-Strecken 1 ermittelt.

## Patentansprüche

1. Verfahren zum Feststellen des Passierens eines vorgegebenen Ortes (W_{xy}) durch ein sich in einer vorgegebenen Richtung bewegendes Objekt (P) mit einem Gerät (OBU), das einen Speicher (M) zur Speicherung der Ortskoordinaten des vorgegebenen Ortes, eine Einrichtung (POS) zur Erkennung der Position des Objektes sowie ein Rechenwerk (CPU) zur Überprüfung der Objekt-Position (P_{n,xy}, P_{n+1,xy}) relativ zum vorgegebenen Ort aufweist, **dadurch gekennzeichnet, dass** dem Ort (W_{xy}) ergänzend zu den Ortskoordinaten Parameter betreffend eine vom Ort (W_{xy}) ausgehende, zumindest ungefähr in jene Richtung weisende Strecke (h), aus der sich das bewegliche Objekt (P) bei seiner Bewegung in der vorgegebenen Richtung annähert, sowie betreffend eine Querstrecke (c), die sich am vom vorgegebenen Ort (W_{xy}) abgelegenen Ende der vom Ort ausgehenden Strecke (h) zu deren beiden Seiten hin in Form von Teilstrecken (a, b) erstreckt, bestimmt und im Speicher (M) abgelegt werden, dass zu jeweils zwei aufeinanderfolgenden Zeitpunkten die aufeinanderfolgenden Positionen (P_{n,xy}; P_{n+1,xy}) des sich bewegenden Objekts (P) bestimmt werden und die durch diese jeweils zwei Positionen festgelegte Strecke (1) auf einen Schnittpunkt mit der Querstrecke (c) geprüft wird, wobei im Fall des Feststellens eines Schnittpunktes zwischen der Positionen-Strecke (1) und der Querstrecke (c) auf das Passieren des Ortes (W_{xy}) entschieden wird.

2. Verfahren nach Anspruch 1, **dadurch gekennzeichnet, dass** die Querstrecke (c) als unter einem Winkel von 90° zur vom vorgegebenen Ort (W_{xy}) ausgehenden Strecke (h) verlaufend bestimmt wird.

3. Verfahren nach Anspruch 1 oder 2, **dadurch gekennzeichnet, dass** zur vorübergehenden Deaktivierung des Feststellens des Passierens des vorgegebenen Ortes (W_{xy}) die Länge der zugeordneten Querstrecke (c) auf Null gesetzt wird.

4. Verfahren nach einem der Ansprüche 1 bis 3, **dadurch gekennzeichnet, dass** die Teilstrecken (a, b) der Querstrecke (c) mit unterschiedlichen Streckenlängen bestimmt werden.

5. Verfahren nach einem der Ansprüche 1 bis 4, **dadurch gekennzeichnet, dass** ergänzend zur vom Ort (W_{xy}) ausgehenden Strecke (h) und zur Querstrecke (c) die Parameter einer durch ein Polygon gegebenen Fläche (F), von der eine Seite die Querstrecke (c) ist, in Zuordnung zum Ort bestimmt und abgespeichert werden, wobei auf ein Passieren des Ortes (W_{xy}) nur dann entschieden wird, wenn zusätzlich zum Schnittpunkt festgestellt wird, dass die zum späteren (tₙ₊₁) der zwei Zeitpunkte festgestellte Position (P_{n+1,xy}) des Objektes (P) innerhalb der Fläche (F) liegt.

6. Verfahren nach Anspruch 5, **dadurch gekennzeichnet, dass** die Fläche als Fläche mit rechtwinkeligen Ecken bestimmt wird.

## Claims

1. A method for assessing the passing of a predefined location (W_{xy}) by an object (P) moving in a predefined direction by means of a device (OBU) having a memory (M) for storing the coordinates of the predefined location, an equipment (POS) for detecting the position of the object as well as a central processing unit (CPU) for examining the position of the object (P_{n,xy}, P_{n+1,xy}) in relation to the predefined location, **characterized in that**:
in addition to the coordinates of the location, parameters for the location (W_{xy}) are determined and stored in the memory (M) said parameters relating to a section (h) starting at the location (W_{xy}) and pointing at least approximately into the direction from which the moving object (P) is approaching during its movement in the predefined direction, as well as to a transversely extending section (c) which at the predefined location (W_{xy}) extends from the remote end of the section (h) starting at the location on both of its sides in the form of section parts (a, b);
at two subsequent points in time the subsequent positions (P_{n,xy}; P_{n+1,xy}) of the moving object (P) are determined and the section (1) determined by said two positions is examined in order to verify an intersection point with the transversely extending section (c), wherein upon detecting an intersection point between the section determined by said positions (1) and the transversely running section (c) the passing of the location (W_{xy}) is decided.

2. The method according to claim 1, **characterized in that** the transversely extending section (c) is defined as extending under an angle of 90° to the section (h) starting at the predefined location (W_{xy}).

3. The method according to claim 1 or 2, **characterized in that** the length of the associated transversely extending section (c) is set to zero in order to temporarily deactivate the assessment of the passing of the predefined location (W_{xy}).

4. The method according to any one of claims 1 to 3, **characterized in that** the section parts (a, b) of the transversely extending section (c) have different section lengths.

5. The method according to any one of claims 1 to 4, **characterized in that** in addition to the section (h) starting at the location (W_{xy}) and to the transversely extending section (c) the parameters of an area (F) defined by a polygon, of which one side is the transversely extending section (c), are determined and saved in association with the location, wherein the decision to pass the location (w_{xy}) is only made if in addition to the intersection point it is determined that the position (P_{n+1,xy}) of the object (P) determined at the later (tₙ₊₁) of the two points in time is located within the area (F).

6. The method according to claim 5, **characterized in that** the area is defined as an area with rectangular corners.

## Revendications

1. Procédé de détermination du passage d'un endroit prédéterminé (W_{xy}) par un objet (P) se déplaçant dans une direction prédéterminée grâce à un appareil (OBU), qui présente une mémoire (M) pour mémoriser les coordonnées locales de l'endroit prédéterminé, un dispositif (POS) pour reconnaître la position de l'objet ainsi qu'une unité de calcul (CPU) pour vérifier la position de l'objet (P_{n,xy}, P_{n+1,xy}) par rapport à l'endroit prédéterminé, **caractérisé en ce que**, en plus des coordonnées locales, des paramètres concernant un tronçon (h) s'éloignant de l'endroit (W_{xy}) et au moins orienté à peu près dans une direction, tronçon depuis lequel l'objet en mouvement (P) se rapproche par son déplacement dans la direction prédéterminée, ainsi que concernant un tronçon transversal (c), qui s'étend sous la forme de tronçons partiels (a, b) à l'extrémité isolée par l'endroit prédéterminé (W_{xy}) du tronçon (h) s'éloignant de l'endroit sur ses deux côtés, sont déterminés et stockés dans la mémoire (M), **en ce que**, en deux points temporels consécutifs respectifs sont déterminées les positions (P_{n,xy}; P_{n+1,xy}) consécutives de l'objet se déplaçant (P) et le tronçon (1) déterminé par ces deux positions respectives est vérifié sur un point d'intersection avec le tronçon transversal (c), dans lequel, en cas de détermination d'un point d'intersection entre le tronçon des positions (1) et 1 tronçon transversal (c), il est décidé du passage de l'endroit (W_{xy}) .

2. Procédé selon la revendication 1, **caractérisé en ce que** le tronçon transversal (c) est déterminé comme s'étendant selon un angle de 90° par rapport au tronçon (h) s'éloignant de l'endroit prédéterminé (W_{xy}).

3. Procédé selon la revendication 1 ou 2, **caractérisé en ce que**, en vue de la désactivation temporaire de la détermination du passage de l'endroit prédéterminé (W_{xy}), la longueur du tronçon transversal associé (c) est fixée à zéro.

4. Procédé selon l'une des revendications 1 à 3, **caractérisé en ce que** les tronçons partiels (a, b) du tronçon transversal (c) sont déterminés avec des longueurs de tronçon différentes.

5. Procédé selon l'une des revendications 1 à 4, **caractérisé en ce que**, en plus du tronçon (h) s'éloignant de l'endroit (W_{xy}) et du tronçon transversal (c), les paramètres d'une surface (F) donnée par un polygone, dont un côté est le tronçon transversal (c), sont déterminés en association avec l'endroit et mémorisés, dans lequel il est décidé du passage de l'endroit (W_{xy}) uniquement lorsqu'il est reconnu en plus du point d'intersection que la position (P_{n+1,xy}) de l'objet (P) déterminée au point le plus tardif (tₙ₊₁) des deux points temporels se trouve à l'intérieur de la surface (F).

6. Procédé selon la revendication 5, **caractérisé en ce que** la surface est déterminée sous la forme d'une surface avec des angles droits.
